# EUROPEAN PATENT APPLICATION

(11) **EP 4 325 267 A1**
(43) Date of publication of application: **21.02.2024**
(21) Application number: 21936404.9
(22) Date of filing: 14.04.2021
(51) Int. Cl.: G02B 7/02, G03B 11/00, G03B 13/00

(54) **OPTICAL FILTER SWITCHING DEVICE**

(71) Applicant: Beijing Xiaomi Mobile Software Co., Ltd., Beijing 100085 (CN)
(72) Inventor: UNO, Masaru, Tokyo 141--0031 (JP)
(74) Representative: dompatent von Kreisler Selting Werner - Partnerschaft von Patent- und Rechtsanwälten mbB
(86) International application number: PCT/CN2021/087303
(87) International publication number: WO 2022/217513

(57) **Abstract**

The present disclosure provides a filter changer which has a low cost and is small. The filter changer includes: a base portion; a support shaft portion protruding from the base portion; a turntable supported on the support shaft portion to be rotatable about an axis; a plurality of optical filters arranged on the turntable along a circumferential direction; and a turntable drive portion fixed to the base portion and configured to drive the turntable to rotate around the axis. The turntable drive portion includes: a first drive source part formed by attaching a first piezoelectric element and a second piezoelectric element, which are configured to be elongated by energization, in a direction orthogonal to their elongation directions; and a first abutting part abutting against a part of the turntable and configured to move to depict an elliptical trajectory according to deformation of the first drive source part.

## Description

### FIELD

The present disclosure relates to a filter changer which is used in a camera module carried in an electronic device (an information device), such as a smart phone, or the like, and with which each of a plurality of optical filters can be arranged on an optical axis of a camera lens.

### BACKGROUND

As a related art, for example, a camera shooting apparatus described in Japanese Laid-open Publication No. 2003-259167 is cited. A filter changer of the camera shooting apparatus includes a stepping motor, a turntable, a plurality of gears, and a worm gear. The stepping motor as a drive source of the filter changer has a screw shaft, and transmits a drive force to the plurality of gears via the worm gear, so as to finally move the turntable with a plurality of optical filters.

### SUMMARY

### Technical problem to be solved by the present disclosure

In the related art, since the plurality of gears, the screw shaft, and the worm gear are required, the filter changer has a complicated structure. In addition, due to a small torque, a required reduction ratio becomes large. Therefore, there exist disadvantages of a high cost and a large required space.

In view of this, an object of the present disclosure is to provide a small filter changer with a low cost.

### Technical solution for solving the problem

The present disclosure provides a filter changer, including: a base portion; a support shaft portion protruding from the base portion; a turntable supported on the support shaft portion to be rotatable about an axis; a plurality of optical filters arranged on the turntable along a circumferential direction; and a turntable drive portion fixed to the base portion and configured to drive the turntable to rotate around the axis. The turntable drive portion includes: a first drive source part formed by attaching a first piezoelectric element and a second piezoelectric element, which are configured to be elongated by energization, in a direction orthogonal to their elongation directions; and a first abutting part abutting against a part of the turntable and configured to move to depict an elliptical trajectory according to deformation of the first drive source part.

In addition, a movable filter, which is a part of the plurality of optical filters, is arranged to be rotatable with respect to the turntable, and has a circular outer circumference shape; the turntable has a filter drive portion for rotating the movable filter; the filter drive portion includes: a second drive source part formed by attaching a first piezoelectric element and a second piezoelectric element, which are elongated by energization, in a direction orthogonal to their elongation directions; and a second abutting part abutting against an outer circumferential edge of the movable filter and configured to move to depict an elliptical trajectory according to deformation of the second drive source part.

In addition, the movable filter may be a polarizing filter.

In addition, rotation of the turntable is detected by a Hall element arranged on one of the base portion and the turntable and a permanent magnet arranged on the other of the base portion and the turntable.

In addition, the support shaft portion is a portion with an axis protruding from the base portion along an optical axis of a camera lens, an electric wire for supplying power to the turntable drive portion passes through the support shaft portion, and the electric wire ensures to be conductive even when the turntable rotates.

In addition, the turntable includes a flat-plate-shaped filter support portion and a rotation shaft portion, the rotation shaft portion orthogonally extends from a rotation center of the filter support portion to the base portion, and the rotation shaft portion is mounted to the support shaft portion by a bearing.

In addition, the plurality of optical filters are arranged on the turntable at a certain angle interval in the circumferential direction.

In addition, the first abutting part is a protrusion-shaped part which is located at an end of the turntable drive portion and protrudes in a length direction of the first drive source part, and is arranged at a boundary of the first piezoelectric unit and the second piezoelectric unit.

In addition, the present disclosure provides a camera module using the filter changer.

In addition, the present disclosure provides an electronic device using the filter changer. The filter changer according to the present disclosure may be formed in a simple structure directly driven by the piezoelectric elements. Therefore, the low cost and miniaturization can be realized.

### BRIEF DESCRIPTION OF THE DRAWINGS

Fig. 1 is a front view schematically showing a structure of a filter changer according to an embodiment of the present disclosure, and perspectively displaying a part thereof.
Fig. 2 is a longitudinal sectional view schematically showing the structure of the filter changer.
Fig. 3 is a view schematically showing a structure and an action of a drive portion of the filter changer.

### DETAILED DESCRIPTION

A filter changer 1 according to an embodiment of the present disclosure will be described with reference to the drawings. Furthermore, the drawings are schematic views, and relationships between illustrated contents of the drawings may be inaccurate or not matched at times.

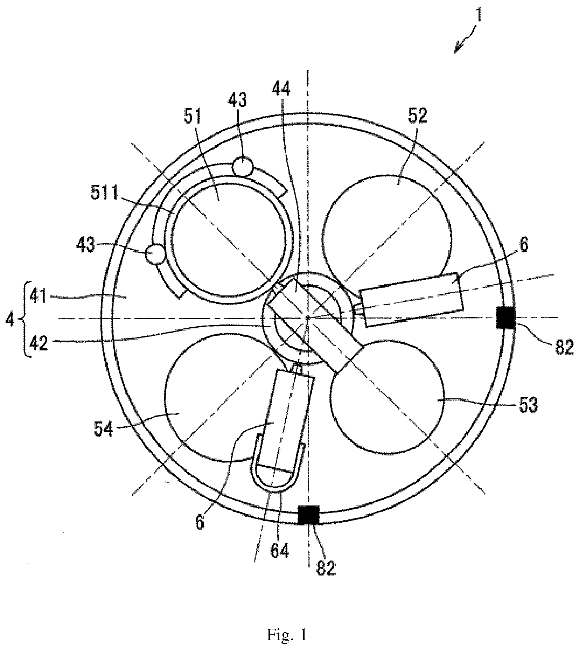

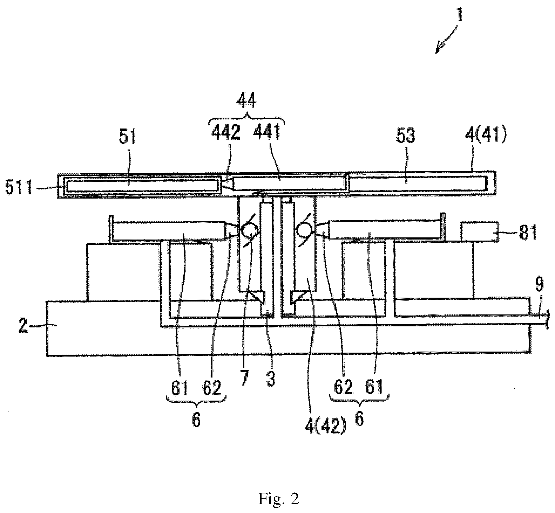

The filter changer 1 according to the embodiment is used in a camera module carried in an electronic device (an information device), such as a smart phone, or the like. As shown in Figs. 1 and 2, the filter changer 1 according to the embodiment mainly includes a base portion 2, a support shaft portion 3, a turntable 4, a plurality of optical filters 51-54, and a turntable drive portion 6.

The base portion 2 is a part for supporting each portion constituting the filter changer 1. Although not explicitly shown in the drawings, a space is provided in a part of the base portion 2 consistent with an optical axis of a camera lens. The space is a structure for light passing through the optical filters 51-54 to pass to the camera lens. The optical axis of the camera lens extends in an inward-outward direction of the page of Fig. 1 and an up-down direction of Fig. 2. In the embodiment, an electric wire 9 passes through the base portion 2 to supply power to a filter drive portion 44.

The support shaft portion 3 is a portion with an axis protruding from the base portion 2 along the optical axis of the camera lens. A lower end of the support shaft portion 3 in the embodiment in Fig. 2 is embedded into and fixed by the base portion 2. In addition, in the embodiment, the electric wire 9 passes through the support shaft portion 3 to supply power to the turntable drive portion 6 and the filter drive portion 44. Furthermore, since the filter drive portion 44 rotates together with the turntable 4, the electrical wire 9 is configured to be conductive while allowing rotation.

The turntable 4 is supported on the support shaft portion 3 to be rotatable about an axis. The turntable 4 includes a filter support portion 41 and a rotation shaft portion 42, the filter support portion 41 has a circular plate shape and a flat plate shape, and the rotation shaft portion 42 orthogonally extends from a rotation center of the filter support portion 41 to the base portion 2. An outer circumferential surface of the rotation shaft portion 42 has a circular cross-sectional shape with respect to the axis. The rotation shaft portion 42 is mounted on the support shaft portion 3. A ball bearing 7 is arranged between the rotation shaft portion 42 and the support shaft portion 3 and rotates with low friction. The filter support portion 41 rotates integrally with the rotation shaft portion 42. Furthermore, the filter support portion 41 is not limited to the circular plate shape, and may have various shapes, such as a polygonal shape, or the like. In addition, the filter support portion 41 and the rotation shaft portion 42 may be formed integrally, or may be formed separately and integrated by assembling.

As shown in Fig. 1, the plurality of optical filters 51-54 are arranged on the turntable 4 in a circumferential direction. In the embodiment, the four filters are interchangeable. Specifically, the four filters include a polarizing filter (a CPL filter) 51, a dimming filter (a ND filter) 52, a diffusion filter (a filter for generating a blurred image) 53, and a hole portion 54 (no filter). Furthermore, in the embodiment, the hole portion 54 is also described as a type of filter. The four filters 51-54 are arranged at a certain angle interval (specifically, 90°) in the circumferential direction. By rotating the turntable 4, the filters 51-54 are respectively positioned on the optical axis of the camera lens every 90° rotation angle. Specifically, a state in which the polarizing filter (the CPL filter) 51 is located on the optical axis of the camera lens is used as a reference. As shown in Fig. 1, when the turntable 4 is rotated counterclockwise by 90°, the dimming filter (the ND filter) 52 is located on the optical axis of the camera lens. When the turntable 4 is rotated counterclockwise by 90° again, the diffusion filter 53 is located on the optical axis of the camera lens. When the turntable 4 is rotated counterclockwise by 90° again, the hole portion 54 is located on the optical axis of the camera lens (in a state without the optical filter).

Rotation of the turntable 4 is detected by a combination of a Hall element 81 (refer to Fig. 2, but only one is shown in Fig. 2) arranged on the base portion 2 and a permanent magnet 82 (refer to Fig. 1) arranged on the turntable 4. Thus, a positional relationship of each of the filters 51-54 with respect to the camera lens can be detected. In the embodiment, the rotation of the turntable 4 can be easily detected by the combination of the Hall element 81 and the permanent magnet 82 of an existing unit. Furthermore, in contrast to the embodiment, the permanent magnet 82 may be arranged on the base portion 2, and the Hall element 81 may be arranged on the turntable 4. The Hall element 81 is supplied with power by a flexible circuit board not shown in the drawings. Two Hall elements 81, which are separated by 90° with the rotation center of the filter support portion 41 of the turntable 4 as a reference, serve as a group (refer to Fig. 1 for the Hall element 81), and two permanent magnets 82, which are separated by 90° with the rotation center of the filter support portion 41 of the turntable 4 as a reference, serve as a group. As shown in table 1, it can be detected which filter is located on the optical axis of the camera lens by a mode in which either of the two Hall elements 81 (A, B) reacts to the permanent magnet. In table 1, a state in which the Hall element 81 reacts is "ON", and a state in which the Hall element 81 does not react is "OFF". Furthermore, table 1 only shows an example, and the present disclosure is not limited thereto.

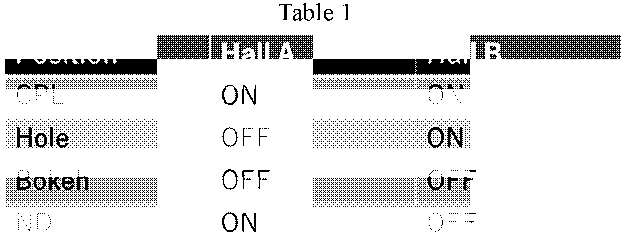

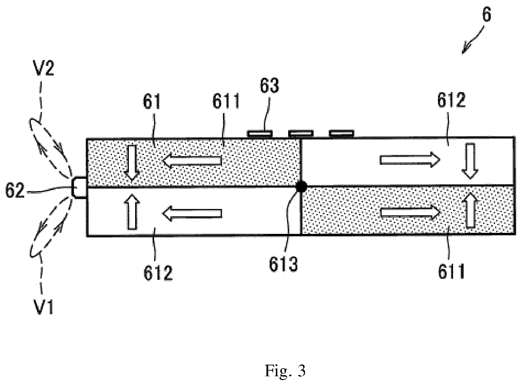

The turntable drive portion 6 is fixed on the base portion 2 and drives the turntable 4 (specifically, the rotation shaft portion 42) to rotate around the axis. In the embodiment, as shown in Fig. 1, two turntable drive portions 6 are arranged to have a substantial V shape in a front view. Furthermore, the number of the turntable drive portions 6 is not limited to two, and may be one, three or more. Fig. 3 schematically shows a structure and an action of the turntable drive portion 6. The turntable drive portion 6 includes a first drive source part 61 and a first abutting part 62. Three protrusions arranged on an illustrated upper end edge of the turntable drive portion 6 are electrodes 63 for supplying power to piezoelectric elements 611, 612. The piezoelectric element is supplied with power by a flexible circuit board not shown in the drawings. At least one of the turntable drive portions 6 includes a support spring 64 at a radially outer position, and a force is applied in a radially inward direction by the support spring 64.

The first drive source part 61 is formed by attaching a first piezoelectric element 611 and a second piezoelectric element 612, which are configured to be elongated by energization, in a direction orthogonal to their elongation directions. The first piezoelectric element 611 and the second piezoelectric element 612 are also arranged in a diagonal direction, and two first piezoelectric elements 611 and two second piezoelectric elements 612 are used to form the drive source portion 61. In the embodiment, since the drive source portion 61 may be bent and deformed by the energization of the first piezoelectric element 611 and the second piezoelectric element 612, either the first piezoelectric element 611 or the second piezoelectric element 612 is energized only, and the first piezoelectric element 611 and the second piezoelectric element 612 are not energized at the same time. However, a voltage may be set so that both the first piezoelectric element 611 and the second piezoelectric element 612 can be energized at the same time.

The first abutting part 62 is a protrusion-shaped part which is located at a left end shown in Fig. 3 and protrudes in a length direction of the first drive source part 61. The first abutting part 62 is arranged at a boundary between the first piezoelectric element 611 and the second piezoelectric element 612 on the left side in the drawing. The first abutting part 62 is a part which outputs the deformation of the first drive source part 61 as a force. Therefore, a positional relationship of the first abutting part 62 with respect to the first drive source part 61 is not limited to the embodiment, and the first abutting part 62 may also be arranged on a side surface of the first drive source part 61 or biased with respect to the first piezoelectric element 611 and the second piezoelectric element 612. The first abutting part 62 abuts against the outer circumferential surface of the rotation shaft portion 42 which is a part of the turntable 4, and is configured to move to depict elliptical trajectories V1, V2 shown by dotted lines in Fig. 3 according to the deformation of the first drive source part 61.

When power is supplied to the first piezoelectric elements 611 located in shaded upper left and lower right regions in Fig. 3, the regions extend in a horizontal direction. On the other hand, when no power is supplied to the second piezoelectric elements 612 located in colorless lower left and upper right regions in Fig. 3, the regions maintain rectangular shapes shown in the drawing. Therefore, the first piezoelectric element 611 is deformed in a direction depicted by arrows in the drawing, and the second piezoelectric element 612 is also deformed accordingly. Therefore, a left portion of an assembly of the piezoelectric elements (an assembly of the two first piezoelectric elements 611 and the two second piezoelectric elements 612 in the embodiment) of the drive source portion 61 in the drawing is bent and deformed into an inverse U shape, and a right portion thereof in the drawing is bent and deformed into a U shape, so that the entire assembly is deformed into a "~" shape (or an inverted and horizontal S shape). Therefore, the first abutting part 62 abutting against the turntable 4 moves downwards and leftwards in Fig. 3. Since this movement is carried out while the first piezoelectric element 611 extends, this movement is a movement of an upper left half of the elliptical trajectory V1 shown by the lower left dotted line in Fig. 3. The turntable 4 pressed by the first abutting part 62 is rotated clockwise (rightwards) in Fig. 1 under an action of a force related to this movement. In this way, in the embodiment, the turntable 4 may be directly driven by the turntable drive portion 6.

Next, when no power is supplied to the first piezoelectric elements 611 located in the shaded upper left and lower right regions, the regions are contracted in the horizontal direction. The assembly of the piezoelectric elements in the first drive source part 61 returns from the "~" shape to the original rectangular shape in the drawing. At this point, the first abutting part 62 moves upwards and rightwards in Fig. 3. Since this movement is carried out while the first piezoelectric element 611 is contracted, this movement is a movement of a lower right half of the elliptical trajectory V1 shown by the dotted line in Fig. 3. As described above, by turning on and off power supply to the first piezoelectric element 611, the first abutting part 62 depicts the elliptical trajectory shown in the lower left part of Fig. 3.

Conversely, when power is supplied to the second piezoelectric elements 612 located in the colorless lower left and upper right regions, the assembly of the piezoelectric elements in the first drive source part 61 is deformed into a horizontal S shape contrary to the above shape, and therefore, the first abutting part 62 depicts the elliptical trajectory V2 shown in the upper left part of Fig. 3. The turntable 4 subjected to a force related to this movement rotates counterclockwise (leftwards) in Fig. 1. In this way, the turntable 4 can be rotated clockwise and counterclockwise according to the energization states of the piezoelectric elements 611, 612 arranged in the turntable drive portion 6. Furthermore, a central portion 613 of the assembly of the four piezoelectric elements 611, 612 does not move even when each of the piezoelectric elements 611, 612 is energized. Therefore, for example, when the first drive source part 61 is fixed outside, it may be fixed at the central portion 613 as a stationary point.

A movable filter which is a part of the plurality of optical filters is arranged to be rotatable with respect to the turntable 4, and has a circular outer circumference shape. In the embodiment, the movable filter is the polarizing filter (the CPL filter) 51. Since the polarizing filter (the CPL filter) 51 may have a varying polarizing effect depending on a position in the circumferential direction with respect to the optical axis of the camera lens, an image captured by a camera can be changed. Since the polarizing filter (the CPL filter) 51 is rotated with respect to the turntable 4, a rotation support portion 43 and the filter drive portion 44 are provided at a part of the turntable 4 where the polarizing filter (the CPL filter) 51 is arranged. An annular bracket 511 is provided at an outer edge of the polarizing filter (the CPL filter) 51. In order to rotate a filter body part (a part through which light passes) with respect to the turntable 4 by contact with the rotation support portion 43, the bracket 511 rotates around the filter body part. The rotation support portion 43 includes a plurality of spheres in the embodiment, and rotatably supports the bracket 511. The rotation support portion 43 in the embodiment is formed by two spheres. The filter drive portion 44 rotates the polarizing filter (the CPL filter) 51.

The filter drive portion 44 has a same structure and a same action principle as the turntable drive portion 6, and includes: a second drive source part 441 formed by attaching a first piezoelectric element and a second piezoelectric element (not shown, but the same as the piezoelectric elements shown in Fig. 3), which are configured to be elongated by energization, in a direction orthogonal to their elongation directions; and a second abutting part 442 abutting against an outer circumferential edge of the bracket 511 and configured to move to depict an elliptical trajectory according to deformation of the second drive source part 441. According to the energization states of the piezoelectric elements in the filter drive portion 44, the polarizing filter (the CPL filter) 51 can be rotated clockwise and counterclockwise. In this way, in the embodiment, the polarizing filter (the CPL filter) 51 can be directly driven by the filter drive portion 44.

As described above, the embodiment provides the filter changer 1, and the filter changer 1 includes: the base portion 2; the support shaft portion 3 protruding from the base portion 2; the turntable 4 supported on the support shaft portion 3 to be rotatable about the axis; the plurality of optical filters 51-54 arranged on the turntable 4 along the circumferential direction; and the turntable drive portion 6 fixed to the base portion 2 and configured to drive the turntable 4 to rotate around the axis. The turntable drive portion 6 includes: the first drive source part 61 formed by attaching the first piezoelectric element 611 and the second piezoelectric element 612, which are configured to be elongated by energization, in the direction orthogonal to their elongation directions; and the first abutting part 62 abutting against the part of the turntable 4 and configured to move to depict the elliptical trajectories V1, V2 according to the deformation of the first drive source part 61.

With this structure, the turntable 4 can be directly driven by the turntable drive portion 6 which generates the drive force by the piezoelectric elements 611, 612.

In addition, the movable filter 51 which is the part of the plurality of optical filters 51-54 is arranged to be rotatable with respect to the turntable 4, and has the circular outer circumference shape, and the turntable 4 has the filter drive portion 44 for rotating the movable filter 51. The filter drive portion 44 may include: the second drive source part 441 formed by attaching the first piezoelectric element and the second piezoelectric element, which are configured to be elongated by energization, in the direction orthogonal to their elongation directions; and the second abutting part 442 abutting against the outer circumferential edge of the movable filter 51 and configured to move to depict the elliptical trajectory according to the deformation of the second drive source part 441.

With this structure, the movable filter 51 can be directly driven by the filter drive portion 44 which generates the drive force by the piezoelectric elements.

In addition, the movable filter 51 may be the polarizing filter (the CPL filter) 51.

With this structure, the polarizing filter (the CPL filter) 51 can be easily rotated by using the filter drive portion, and the polarizing filter has different polarizing effects according to the position in the circumferential direction with respect to the optical axis of the camera lens.

In addition, the rotation of the turntable 4 can be detected by the Hall element 81 arranged on one of the base portion 2 and the turntable 4 and the permanent magnet 82 arranged on the other of the base portion 2 and the turntable 4.

With this structure, the rotation of the turntable 4 can be detected easily by an existing method.

In addition, the support shaft portion 3 is the portion with the axis protruding from the base portion along the optical axis of the camera lens, the electric wire 9 for supplying power to the turntable drive portion 6 passes through the support shaft portion, and the electric wire 9 can ensure to be conductive even when the turntable 4 rotates.

In addition, the turntable 4 includes the flat-plate-shaped filter support portion 41 and the rotation shaft portion 42, the rotation shaft portion 42 orthogonally extends from the rotation center of the filter support portion 41 to the base portion 2, and the rotation shaft portion 42 may be mounted to the support shaft portion 3 by the bearing 7.

In addition, the plurality of optical filters 51-54 may be arranged on the turntable 4 at a certain angle interval in the circumferential direction.

In addition, the first abutting part 62 may be the protrusion-shaped part which is located at the end of the turntable drive portion 6 and protrudes in the length direction of the first drive source part 61, and may be arranged at the boundary of the first piezoelectric unit 611 and the second piezoelectric unit 612.

In addition, the present disclosure provides the camera module using the filter changer 1.

In addition, the present disclosure provides the electronic device using the filter changer 1.

As described above, the filter changer 1 according to the embodiment may be formed in a simple structure directly driven by the piezoelectric elements 611, 612. Therefore, a low cost and miniaturization can be realized. In addition, by using the high-output piezoelectric element, an intermediate transmission unit, such as a gear, or the like, and a speed reduction unit are not required, and the high-speed rotation can be carried out by direct driving. Therefore, the desired optical filters 51-54 can be quickly positioned on the optical axis of the camera lens, and thus the filter changer 1 with a high performance can be provided.

### REFERENCE NUMERALS

1: filter changer
2: base portion
3: support shaft portion
4: turntable
41: filter support portion
42: rotation shaft portion
44: filter drive portion
441: second drive source part (filter drive portion)
442: second abutting part (filter drive portion)
51: optical filter, movable filter, polarizing filter (CPL filter)
52: optical filter, dimming filter (ND filter)
53: optical filter, diffusion filter
54: optical filter, hole portion
6: turntable drive portion
61: first drive source part (turntable drive portion)
611: first piezoelectric element
612: second piezoelectric element
62: first abutting part (turntable drive portion)
7: bearing
81: Hall element
82: permanent magnet
9: electric wire
V1, V2: elliptical trajectory

## Claims

1. A filter changer, comprising:
a base portion;
a support shaft portion protruding from the base portion;
a turntable supported on the support shaft portion to be rotatable about an axis;
a plurality of optical filters arranged on the turntable along a circumferential direction; and
a turntable drive portion fixed to the base portion and configured to drive the turntable to rotate around the axis,
wherein the turntable drive portion comprises: a first drive source part formed by attaching a first piezoelectric element and a second piezoelectric element, which are configured to be elongated by energization, in a direction orthogonal to their elongation directions; and a first abutting part abutting against a part of the turntable and configured to move to depict an elliptical trajectory according to deformation of the first drive source part.

2. The filter changer according to claim 1, wherein a movable filter, which is a part of the plurality of optical filters, is arranged to be rotatable with respect to the turntable, and has a circular outer circumference shape;
the turntable has a filter drive portion for rotating the movable filter; and
the filter drive portion comprises: a second drive source part formed by attaching a first piezoelectric element and a second piezoelectric element, which are configured to be elongated by energization, in a direction orthogonal to their elongation directions; and a second abutting part abutting against an outer circumferential edge of the movable filter and configured to move to depict an elliptical trajectory according to deformation of the second drive source part.

3. The filter changer according to claim 2, wherein the movable filter is a polarizing filter.

4. The filter changer according to any one of claims 1 to 3, wherein rotation of the turntable is detected by a permanent magnet arranged on one of the base portion and the turntable and a Hall element arranged on the other of the base portion and the turntable.

5. The filter changer according to any one of claims 1 to 4, wherein the support shaft portion is a portion with an axis protruding from the base portion along an optical axis of a camera lens, and an electric wire for supplying power to the turntable drive portion passes through the support shaft portion; and
the electric wire ensures to be conductive even when the turntable rotates.

6. The filter changer according to any one of claims 1 to 5, wherein the turntable comprises a flat-plate-shaped filter support portion and a rotation shaft portion, and the rotation shaft portion orthogonally extends from a rotation center of the filter support portion to the base portion; and
the rotation shaft portion is mounted to the support shaft portion by a bearing.

7. The filter changer according to any one of claims 1 to 6, wherein the plurality of optical filters are arranged on the turntable at a certain angle interval in the circumferential direction.

8. The filter changer according to claim 2, wherein the first abutting part is a protrusion-shaped part located at an end of the turntable drive portion and protruding in a length direction of the first drive source part, and is arranged at a boundary of the first piezoelectric unit and the second piezoelectric unit.

9. A camera module, using a filter changer according to any one of claims 1 to 8.

10. An electronic device, using a filter changer according to any one of claims 1 to 8.
